(19) **Europäisches Patentamt**
**European Patent Office**
**Office européen des brevets**

(11) **EP 3 588 180 B1**

(12) **EUROPEAN PATENT SPECIFICATION**

(45) Date of publication and mention
of the grant of the patent:
**14.12.2022 Bulletin 2022/50**

(51) International Patent Classification (IPC):
**G02F 1/1339** *(2006.01)*

(52) Cooperative Patent Classification (CPC):
**G02F 1/13394;** G02F 1/13396; G02F 1/13398

(21) Application number: **19181181.9**

(22) Date of filing: **19.06.2019**

(54) **ELECTRONIC MODULATING DEVICE**

ELEKTRONISCHE MODULATIONSVORRICHTUNG

DISPOSITIF DE MODULATION ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.06.2018 US 201862688457 P
03.12.2018 CN 201811465528**

(43) Date of publication of application:
**01.01.2020 Bulletin 2020/01**

(73) Proprietor: **InnoLux Corporation
Chu-Nan, Miao-Li 350 (TW)**

(72) Inventors:
• **HUNG, Tang-Chin**
**350 Miao-Li County (TW)**
• **HUANG, Zhi-Fu**
**350 Miao-Li County (TW)**

(74) Representative: **2K Patentanwälte Blasberg
Kewitz & Reichel
Partnerschaft mbB
Schumannstrasse 27
60325 Frankfurt am Main (DE)**

(56) References cited:
**JP-A- 2003 121 857     US-A1- 2002 005 929
US-A1- 2007 097 312**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

CROSS REFERENCE TO RELATED APPLICATIONS

This application claims priority of China Patent Application No. 201811465528.0, filed on December. 3, 2018, which claims the benefit of priority from a provisional application of U.S. Patent Application No. 62/688,457 filed on June 22, 2018.

BACKGROUND

## Technical Field

The present disclosure relates to an electronic modulating device, and in particular to an electronic modulating device that includes adjustment units.

## Description of the Related Art

Electronic products, such as smartphones, tablets, notebooks, monitors, and TVs, have become indispensable necessities in modern society. With the flourishing development of such portable electronic products, consumers have high expectations regarding the quality, functionality, or price of such products. These electronic products are often used as electronic modulating devices, for modulating electromagnetic waves. However, a new electronic modulating device that is suitable for use in a variety of surroundings is needed.

US 2002005929 A1 discloses a liquid crystal display device in which the gap between its transparent substrates can be kept uniform irrespective of whether the temperature of the device is normal temperature or high temperature. The liquid crystal display device includes transparent substrates disposed in opposition to each other with a liquid crystal being interposed therebetween, and plural spacers secured to one of the transparent substrates so as to support the other transparent substrate. The plural spacers include first spacers and second spacers, and the first spacers are formed of a material whose elasticity is higher than that of the second spacers, and are larger in height than the second spacers.

US 2007/097312 A1 discloses a liquid crystal display includes a first substrate having a display area and a peripheral area and including a plurality of pixels formed in the display area, a second substrate facing the first substrate, and a plurality of first groups of bead spacers and a plurality of second groups of bead spacers disposed between the first substrate and the second substrate. The first groups of bead spacers have a different size or different elasticity coefficient than the second groups of bead spacers, and include a plurality of bead spacers, respectively.

JP 2003 121857 A provides a color filter for a liquid crystal display device provided with columnar spacers, with which the liquid crystal display device can be attained, wherein panel assembly can be performed while the gap is being properly maintained, the gap is reduced and fixedly maintained when excess load is applied or when a liquid crystal is contracted under a low temperature condition and accordingly color unevenness or the like is not generated and vacuum bubbles (low temperature bubbles) are not generated. The columnar spacers are constituted of two columnar spacers of a columnar spacer (a first columnar spacer) having the height and the sectional area corresponding to the deformation by the load at the time when the panel is assembled and the deformation following the contraction of the liquid crystal at low temperature and a columnar spacer (a second columnar spacer) having height and sectional area holding the gap between substrates when excess load is applied and when the liquid crystal is contracted under low temperature condition.

SUMMARY

In accordance with some embodiments, an electronic modulating device for modulating electromagnetic waves according to claim 1 is provided. The electronic modulating device includes a first substrate. The first substrate includes a first portion and a second portion. The electronic modulating device also includes a second substrate disposed opposite the first substrate. The electronic modulating device further includes at least one working device disposed between the first substrate and the second substrate, and the working device comprises a driving element, a first electrode and a second electrode, wherein the working device overlaps the first portion and does not overlap the second portion, and there is no working device on a region of the first substrate corresponding to the second portion. In addition, the electronic modulating device includes a first adjustment unit disposed between the first portion of the first substrate and the second substrate. The first adjustment unit consists of a spacer and has a first elastic coefficient. The electronic modulating device also includes a second adjustment unit disposed between the second portion of the first substrate and the second substrate, wherein the second adjustment unit consists of a spacer and has a second elastic coefficient. The electronic modulating device also comprises a modulating material layer disposed between the first substrate and the second substrate, and between the first electrode and the second electrode, wherein the modulating material layer is a liquid crystal layer. The electronic modulating device is characterized in that it further comprises a plurality of third adjustment units disposed between the first substrate and the second substrate, and each of the plurality of third adjustment units consists of a spacer and has a third elastic coefficient, wherein the first adjustment unit is disposed between two of the plurality of third adjustment units, and the second adjustment unit is disposed between another two of the plurality of third adjustment units. The unit of first elastic coefficient, the second elastic coefficient and the third elastic coefficient is N/m$^2$, the first elastic coefficient, the second elastic coefficient and the third elastic coefficient respectively correspond to Young's modulus of the material forming the spacers of the first adjustment unit, the second adjustment unit and the third adjustment unit, and the first elastic coefficient is less than the second elastic coefficient, and the third elastic coefficient is greater than the second elastic coefficient.

In accordance with some embodiments , an electronic modulating device for modulating electromagnetic waves according to claim 7 is provided. The electronic modulating device includes a first substrate. The first substrate includes a first portion and a second portion. The electronic modulating device also includes a second substrate disposed opposite the first substrate. The electronic modulating device further includes at least one working device disposed between the first substrate and the second substrate, and the working device comprises a driving element, a first electrode and a second electrode, wherein the working device overlaps the first portion and does not overlap the second portion, and there is no working device on a region of the first substrate corresponding to the second portion. In addition, the electronic modulating device includes a first adjustment unit disposed between the first portion of the first substrate and the second substrate. The first adjustment unit consists of a spacer and has a first thickness along a normal direction of the first substrate. The electronic modulating device also includes second adjustment unit disposed between the second portion of the first substrate and the second substrate. The second adjustment unit consists of a spacer and has a second thickness along the normal direction of the first substrate. The electronic modulating device also comprises a modulating material layer disposed between the first substrate and the second substrate, and the modulating material layer is a liquid crystal layer. The electronic modulating device is characterized in that it further comprises a plurality of third adjustment units disposed between the first substrate and the second substrate, each of the plurality of third adjustment units consists of a spacer and each of the plurality of third adjustment units has a third thickness along the normal direction of the first substrate, wherein the first adjustment unit is disposed between two of the plurality of third adjustment units, and the second adjustment unit is disposed between another two of the plurality of third adjustment unitscry. The first thickness is less than the second thickness and the third thickness is less than the first thickness.

A detailed description is given in the following embodiments with reference to the accompanying drawings.

## BRIEF DESCRIPTION OF THE DRAWINGS

The disclosure may be understood by reading the subsequent detailed description and examples with references made to the accompanying drawings, wherein:

FIG. 1 illustrates a top view of an electronic modulating device in accordance with some embodiments.

FIG. 2 illustrates an enlarged view of region A of the electronic modulating device in accordance with some embodiments.

FIGs. 3A and 3B illustrate cross-sectional views of different stages of a process for manufacturing the electronic modulating device in accordance with some embodiments.

FIG. 4 illustrates a cross-sectional view of an electronic modulating device in accordance with some embodiments.

FIGs. 5A and 5B illustrate cross-sectional views of different stages of a process for manufacturing the electronic modulating device in accordance with some embodiments.

FIG. 6 illustrates a cross-sectional view of the electronic modulating device in accordance with some embodiments.

FIG. 7 illustrates a cross-sectional view of an electronic modulating device in accordance with some embodiments.

FIGs. 8A and 8B illustrate cross-sectional views of the first portion and the second portion of the electronic modulating device in accordance with some embodiments.

## DETAILED DESCRIPTION

The electronic modulating device of the present disclosure and the manufacturing method thereof are described in detail in the following description. In the following detailed description, for purposes of explanation, numerous specific details and embodiments are set forth in order to provide a thorough understanding of the present disclosure. It will be apparent, however, that the exemplary embodiments set forth herein are used merely for the purpose of illustration, and the inventive concept may be embodied in various forms without being limited to those exemplary embodiments. In addition, the drawings of different embodiments may use like and/or corresponding numerals to denote like and/or corresponding elements. However, the use of like and/or corresponding numerals in the drawings of different embodiments does not suggest any correlation between different embodiments. In addition, in this specification, expressions such as "first material layer disposed above/on/over a second material layer", may indicate the direct contact of the first material layer and the second material layer, or it may indicate a non-contact state with one or more intermediate layers between the first material layer and the second material layer. In the above situation, the first material layer may not be in direct contact with the second material layer.

In addition, in this specification, relative expressions are used. For example, "upper" or "lower" is used to describe the position of one element relative to another. It should be appreciated that if a device is flipped upside down, an element that is on the "bottom" will become an element that is on the "top".

It should be understood that, although the terms first, second, third etc. may be used herein to describe various elements, components, regions, layers, portions and/or sections, these elements, components, regions, layers, portions and/or sections should not be limited by these terms. These terms are only used to distinguish one element, component, region, layer, portion or section from another element, component, region, layer or section. Thus, a first element, component, region, layer, portion or section discussed below could be termed a second element, component, region, layer, portion or section without departing from the teachings of the present disclosure.

It should be understood that this description of the exemplary embodiments is intended to be read in connection with the accompanying drawings, which are to be considered part of the entire written description. The drawings are not drawn to scale. In addition, structures and devices are shown schematically in order to simplify the drawing. In the drawings, some components may be omitted for clarity. Moreover, some components in the drawings may be eliminated as another embodiment.

The terms "about" and "substantially" typically mean +/- 20% of the stated value, +/- 10% of the stated value, +/- 5% of the stated value, +/- 3% of the stated value, +/- 2% of the stated value, +/- 1% of the stated value or +/- 0.5% of the stated value. The stated value of the present disclosure is an approximate value. When there is no specific description, the stated value includes the meaning of "about" or "substantially". Moreover, when considering the deviation or the fluctuation of the manufacturing process, the term "same" may also include the meaning of "about" or "substantially".

Unless defined otherwise, all technical and scientific terms used herein have the same meaning as commonly understood by one of ordinary skill in the art to which this disclosure belongs. It should be appreciated that, in each case, the term, which is defined in a commonly used dictionary, should be interpreted as having a meaning that conforms to the relative skills of the present disclosure and the background or the context of the present disclosure, and should not be interpreted in an idealized or overly formal manner unless so defined.

The term "substrate" may include elements and films that are already formed on the substrate, and may include a plurality of active elements, such as transistors. For brevity, it is illustrated in a plate substrate.

In addition, in some embodiments, terms concerning attachments, coupling and the like, such as "connected" and "interconnected," refer to a relationship wherein structures are secured or attached to one another either directly or indirectly through intervening structures, as well as both movable or rigid attachments or relationships, unless expressly described otherwise.

In addition, the phrase "in a range from a first value to a second value" indicates the range includes the first value, the second value, and other values in between.

In addition, the term "cover" includes the meaning of "cover partially" or "cover completely".

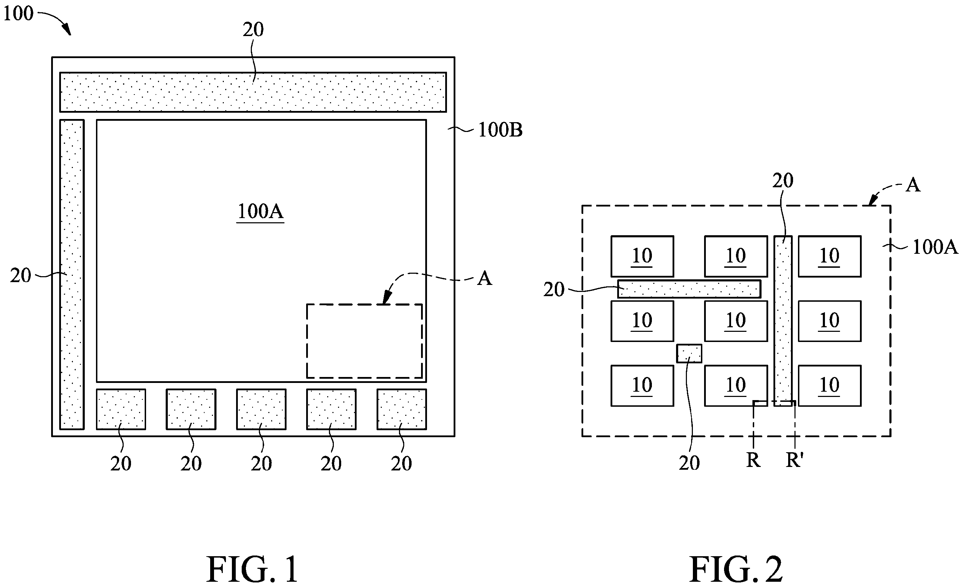

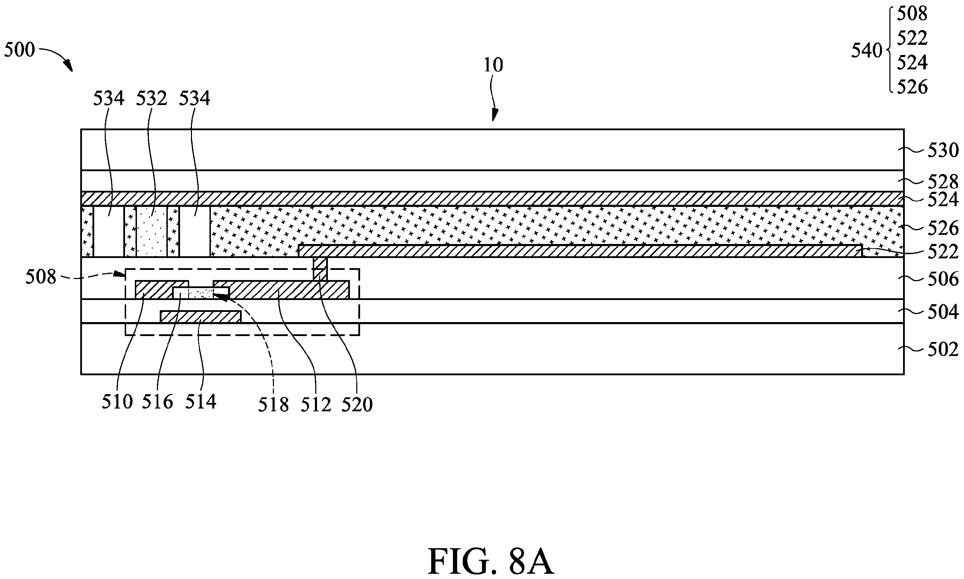

Refer to FIG. 1, which illustrates a top view of an electronic modulating device 100 in accordance with some embodiments. The electronic modulating device 100 may include a working region 100A and a non-working region 100B as shown in FIG. 1. The working region 100A may include a working device (shown in FIG. 8A). The non-working region 100B may be adjacent to the working region 100A. The electronic modulating device 100 may include an integrated circuit (IC) therein. The IC may include various passive and active microelectronic devices, such as thin film resistors, other capacitors (e.g. metal-insulator-metal capacitor, MIMCAP), inductors, diodes, metal-oxide-semiconductor field effect transistors (MOSFETs), complementary MOS (CMOS) transistors, bipolar junction transistors (BJTs), laterally diffused MOS (LDMOS) transistors, high power MOS transistors, and other types of transistors.

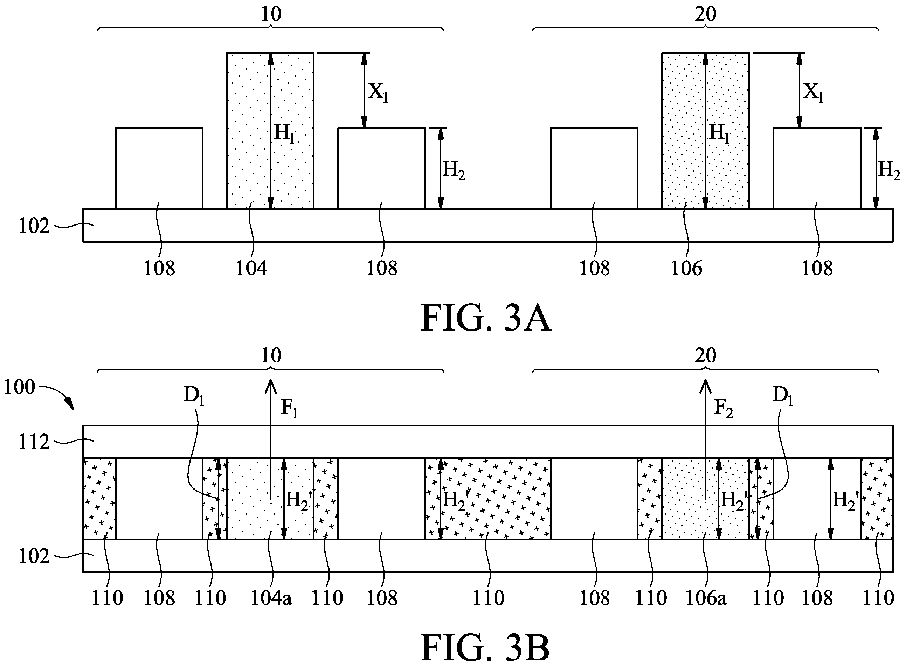

Refer to FIG. 2, which illustrates an enlarged view of region A of the electronic modulating device 100 in accordance with some embodiments. As shown in FIG. 2A, the working region 100A may include a plurality of first portions 10 and a plurality of second portions 20. According to the invention, the first substrate comprises a first portion and a second portion and there is at least one working device in the first portion 10. The first portion 10 may be a MXN array, wherein M and N are positive integers. However, the scope of the disclosure is not intended to be limited. The second portion 20 may be adjacent to the first portion 10. For example, the second portion 20 may be disposed in a region between two first portions 10, have an arbitrary size, and be arranged in an arbitrary way. According to the invention, there is no working device in the second portion 20. According to the invention, the adjustment unit (shown in FIG. 3B) that has less recovering force per unit area is disposed on the first portion 10; the adjustment unit (shown in FIG. 3B) that has greater recovering force per unit area is disposed on the second portion 20.

Refer to FIG. 1, the non-working region 100B may have a plurality of second portion 20. The second portion 20 may have an arbitrary size, and be arranged in an arbitrary way. However, the scope of the disclosure is not intended to be limited.

Refer to FIGs. 3A and 3B, which illustrate cross-sectional views of different stages of a process for manufacturing the electronic modulating device 100 in accordance with the electronic device of claim 1. The cross-sectional view of FIG. 3A corresponds to line R-R' of the working region 100A of FIG. 2. As shown in FIG. 3A, a first substrate 102 is provided. It should be appreciated that the first substrate 102 may include a plurality of layers and various elements formed in and/or on them. For brevity, the first substrate 102 is illustrated in one layer. There is at least one working device disposed on the region of the first substrate 102 corresponding to the first portion 10. There is no working device on the region of the first substrate 102 corresponding to the second portion 20.

As shown in FIG. 3A, at least one adjustment unit 104 is disposed on the first portion 10 of the first substrate 102, and at least one adjustment unit 106 is disposed on the second portion 20 of the first substrate 102. In some embodiments, the material of the adjustment unit 104 and/or adjustment unit 106 may include, but is not limited to, photoresist or another suitable material. In some embodiments, the adjustment unit 104 and/or the adjustment unit 106 may have a rectangle shape in top view. The adjustment unit 104 and/or adjustment unit 106 may be arranged in one or more directions. There is a gap between two adjacent adjustment units 104 and/or adjustment units 106 so that a modulating material layer 110, shown in FIG. 3B, may flow therein. In this embodiment, the adjustment unit 104 and the adjustment unit 106 may be a spacer formed by photoresist, respectively. The adjustment unit 104 and the adjustment unit 106 have a thickness $H_1$. In the present disclosure, the thickness and/or height may be measured in central region along the normal direction of the first substrate 102. The thickness and/or height may be a single value or an average of multiple values. In some embodiments, the thickness and/or height may be a maximum thickness and/or height measured. According to the electronic device of claim 1, the adjustment unit 104 has a first elastic coefficient $K_1$, and the adjustment unit 106 has a second elastic coefficient $K_2$. The second elastic coefficient $K_2$ is greater than the first elastic coefficient $K_1$. In the present disclosure, the elastic coefficient may indicate spring constant whose unit is N/m. The elastic coefficient may also indicate Young's modulus whose unit is N/m$^2$. In this embodiment, the material of the adjustment unit 104 may be the same as that of the adjustment unit 106, but the densities of them may be different. In some embodiments, the density of the adjustment unit 106 may be greater than that of the adjustment unit 104 so that the elastic coefficient of the adjustment unit 106 is greater than that of the adjustment unit 104. However, the scope of the disclosure is not intended to be limited. In other embodiments, the material of the adjustment unit 104 may be different from that of the adjustment unit 106. For example, the adjustment unit 104 and the adjustment unit 106 may be formed by two photoresists that are made by different species so that the adjustment unit 104 and the adjustment unit 106 may have different elastic coefficients. In addition, other methods may be used to differentiate the elastic coefficients of the adjustment unit 104 and the adjustment unit 106.

According to the electronic device of claim 1, a plurality of adjustment units 108 are disposed on the first portion 10 and/or the second portion 20 of the first substrate 102. The material of the adjustment unit 108 may include, but is not limited to, photoresist or another suitable material. As shown in FIG. 3A, the adjustment unit 108 may have the thickness $H_2$. The adjustment unit 108 has third elastic coefficient $K_3$. The third elastic coefficient $K_3$ is greater than the second elastic coefficient $K_2$. In some embodiments, at least one adjustment unit 108 may be disposed between the adjustment unit 104 and the adjustment unit 106. The adjustment unit 104 is disposed between two adjacent adjustment units 108; the adjustment unit 106 is disposed between two adjacent adjustment units 108. As shown in FIG. 3A, there is a thickness difference $X_1$ between the adjustment unit 104 and the adjustment unit 108, and there is the thickness difference $X_1$ between the adjustment unit 106 and the adjustment unit 108.

In some embodiments, the adjustment unit 104, the adjustment unit 106 and the adjustment unit 108 may have different size, such as different area or shape of top surface, or different area or shape of side surface.

Next, as shown in FIG. 3B, a second substrate 112 is disposed on the first substrate 102 so that the adjustment unit 104 and the adjustment unit 106 are compressed. As a result, the electronic modulating device 100 is created. As shown in FIG. 3B, the adjustment unit 104a, the adjustment unit 106a and the adjustment unit 108 are disposed between the first substrate 102 and the second substrate 112. In addition, the adjustment unit 104a, the adjustment unit 106a and the adjustment unit 108 may have the thickness $H_2'$. The thickness $H_2'$ may be less than or equal to the thickness $H_2$. According to the claimed invention, the electronic modulating device 100 includes the modulating material layer 110. The modulating material layer 110 is disposed between the first substrate 102 and the second substrate 112. The material of the modulating material layer 110 is liquid crystal.

It should be appreciated that the second substrate 112 may include a plurality of layers and various elements formed in and/or on them. For brevity, the second substrate 112 is illustrated in one layer. In some embodiments, the second substrate 112 may have at least one flexible film so that the second substrate 112 would have a bumpy or oblique surface.

In some embodiments, the distances between the first substrate 102 and the second substrate 112 that are in different regions are substantially equal. For example, the distance between the first portion 10 of the first substrate 102 and the second substrate 112 is Di, and the distance between the second portion 20 of the first substrate 102 and the second substrate 112 is also $D_1$. As shown in FIGs. 3A and 3B, there is the thickness

difference $X_1$ between the compressed adjustment unit 104a and the adjustment unit 104 not compressed; there is the thickness difference $X_1$ between the compressed adjustment unit 106a and the adjustment unit 106 not compressed. In this embodiment, the adjustment unit 108 is substantially not compressed. The compressed adjustment unit 104a and adjustment unit 106a may have first recovering force $F_1$ and second recovering force $F_2$, respectively. The recovering force mentioned herein may indicate elastic force. The first recovering force $F_1$ and the second recovering force $F_2$ may fit Hooke's law as shown below:

$$F = - K \triangle X \quad \text{equation (1)}$$

In equation (1), K indicates elastic coefficient, and $\triangle X$ indicates the length or thickness that is compressed. Negative sign means that the direction of the recovering force may be different from that of compression or stretch.

In this embodiment, $F_1 = - K_1 X_1$, and $F_2 = - K_2 X_1$. Namely, the recovering force of the adjustment unit 104a may substantially be equal to $K_1 X_1$, and the recovering force of the adjustment unit 106a may substantially be equal to $K_2 X_1$. Since the compressed length of the adjustment unit 104a is substantially the same as that of the adjustment unit 106a, the recovering force of the adjustment unit 104a and the adjustment unit 106a is dependent on their elastic coefficients. As the second elastic coefficient $K_2$ of the adjustment unit 106a is greater than the first elastic coefficient $K_1$ of the adjustment unit 104a, the second recovering force $F_2$ is greater than the first recovering force $F_1$. It should be appreciated that the direction of the recovering force shown in FIG. 3B is merely exemplary, and the direction of the recovering force generated by the adjustment unit 104a and the adjustment unit 106a may not be limited to one direction. In some embodiments, the direction of the first recovering forces $F_1$ and the second recovering force $F_2$ may be the same as the normal direction of the first substrate 102. In addition, the recovering force generated by the adjustment unit 108 is equal to 0 because the compressed length of the adjustment unit 108 is substantially equal to 0.

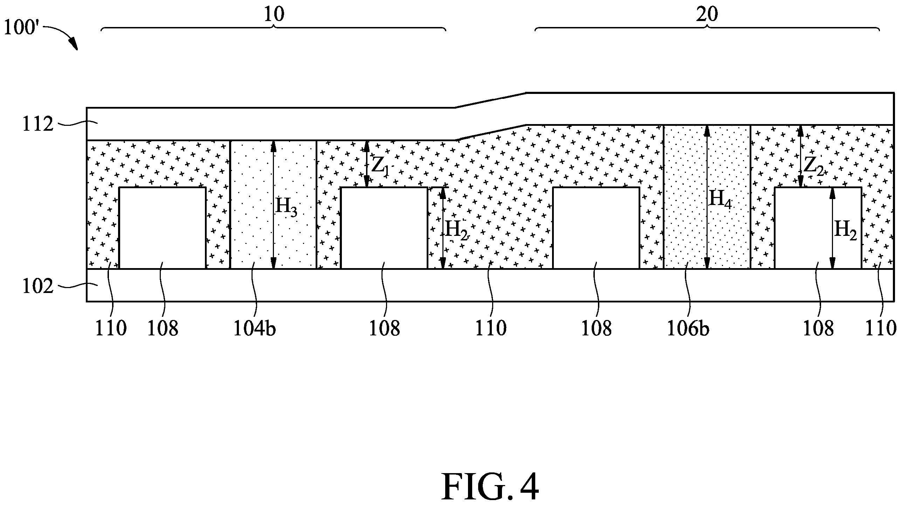

Refer to FIG. 4, which illustrates a cross-sectional view of the electronic modulating device 100' in accordance with some embodiments. The electronic modulating device 100 becomes the electronic modulating device 100' when its volume changes. As mentioned above, the second recovering force $F_2$ may be greater than the first recovering force $F_1$. Therefore, the recovering force pushing on the region of the second substrate 112 that corresponds to the second portion 20 is greater than that corresponds to the first portion 10. As a result, the distance between the first substrate 102 and the second substrate 112 that corresponds to the first portion 10 may be the distance $Z_1$ plus the thickness $H_2$, and the distance between the first substrate 102 and the second substrate 112 that corresponds to the second portion 20 may be the distance $Z_2$ plus the thickness $H_2$. The sum of the distance $Z_1$ and the thickness $H_2$ is less than that of the distance $Z_2$ and the thickness $H_2$. The distance $Z_1$ may less than the distance $Z_2$. In other embodiments, the adjustment unit 104b may have the thickness $H_3$, and the adjustment unit 106b may have the thickness $H_4$. As shown in FIG. 4, the thickness $H_4$ may be greater than the thickness $H_3$. In this embodiment, the distance between the first substrate 102 and the second substrate 112 that corresponds to the first portion 10 is substantially equal to the thickness $H_3$, and the distance between the first substrate 102 and the second substrate 112 that corresponds to the second portion 20 is substantially equal to the thickness $H_4$.

In some cases, deformation of the second substrate 112 may occur due to the volume change of the electronic modulating device heated so that the distance between the first substrate 102 and the second substrate 112 would increase. As a result, the capacitance of the electronic modulating device may change, which influences the performance of the electronic modulating device. In this embodiment, the adjustment unit 104, having less elastic coefficient, is disposed on the first portion 10 on which the working device is disposed; the adjustment unit 106, having greater elastic coefficient, is disposed on the second portion 20 on which the no working device is disposed. As shown in FIG. 4, when the volume of the electronic modulating device changes due to heat, the distance difference between the first portion 10 of the first substrate 102 and the second substrate 112 is less than that between the second portion 20 of the first substrate 102 and the second substrate 112. Namely, the region on which the working device is disposed has less distance difference. Therefore, the working device is stable when temperature changes, thereby improving the reliability of the electronic modulating device 100.

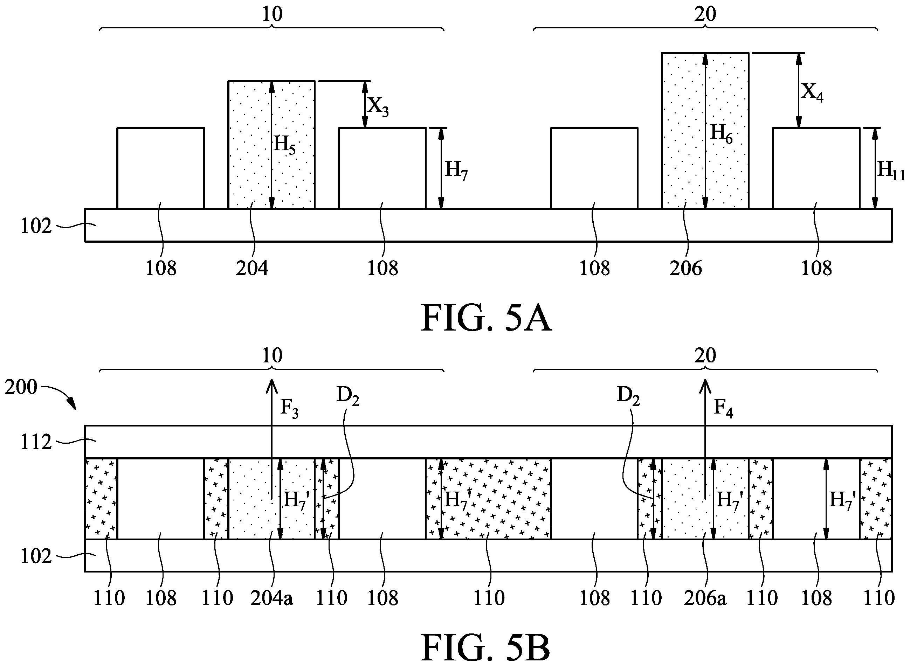

Many variations and/or modifications can be made to embodiments. Refer to FIGs. 5A and 5B, which illustrate cross-sectional views of different stages of a process for manufacturing the electronic modulating device in accordance with the electronic device of claim 7, The structure of FIG. 5A may be the same as or similar to that of FIG. 3A, and one of the differences is that the adjustment units 104 are replaced by adjustment units 204, and the adjustment units 106 are replaced by adjustment units 206. In some embodiments, the material of the adjustment unit 204 may be the same as that of the adjustment unit 206, and the density of the adjustment unit 204 may be the same as that of the adjustment unit 206. Therefore, the adjustment unit 204 and the adjustment unit 206 may substantially have the same elastic coefficient. According to the electronic device of claim 7, the adjustment unit 204 and the adjustment unit 206 have the same fourth elastic coefficient $K_4$. As shown in FIG. 5A, the adjustment unit 204 has the thickness $H_5$, and the adjustment unit 206 has the thickness $H_6$. The thick-

ness $H_6$ is greater than the thickness $H_5$. In addition, the adjustment unit 108 has the thickness $H_7$, and may have third elastic coefficient $K_3$ that is greater than the fourth elastic coefficient $K_4$. As shown in FIG. 5A, there is a thickness difference $X_3$ between the adjustment unit 204 and the adjustment unit 108, and there is a thickness difference $X_4$ between the adjustment unit 206 and the adjustment unit 108. The thickness difference $X_4$ is greater than the thickness difference $X_3$. In some embodiments, the adjustment unit 204, the adjustment unit 206 and the adjustment unit 108 may have different size, such as different area or shape of top surface, or different area or shape of side surface.

Next, as shown in FIG. 5B, the modulating material layer 110 is filled on the first substrate 102 and the second substrate 112 is disposed on the first substrate 102 so that the adjustment unit 204 and the adjustment unit 206 are compressed. As a result, the electronic modulating device 200 is created. As shown in FIG. 5B, the adjustment unit 204a, the adjustment unit 206a, the adjustment unit 108 and the modulating material layer 110 are disposed between the first substrate 102 and the second substrate 112. Moreover, the adjustment unit 204a, the adjustment unit 206a and the adjustment unit 108 may have the thickness $H_7'$. The thickness $H_7'$ is less than or equal to the thickness $H_7$.

In some embodiments, in the electronic modulating device 200, the distances between the first substrate 102 and the second substrate 112 that are in different regions are substantially equal. For example, the distance between the first portion 10 of the first substrate 102 and the second substrate 112 is $D_2$, and the distance between the second portion 20 of the first substrate 102 and the second substrate 112 is also $D_2$. As shown in FIGs. 5A and 5B, there is the thickness difference $X_3$ between the compressed adjustment unit 204a and the adjustment unit 204 not compressed; there is the thickness difference $X_4$ between the compressed adjustment unit 206a and the adjustment unit 206 not compressed. In this embodiment, the adjustment unit 108 is substantially not compressed. The compressed adjustment unit 204a and adjustment unit 206a have third recovering force $F_3$ and fourth recovering force $F_4$, respectively. The third recovering force $F_3$ and the fourth recovering force $F_4$ may fit Hooke's law. In this embodiment, $F_3 = -K_4 X_3$, and $F_4 = -K_4 X_4$. Namely, the recovering force of the adjustment unit 204a may substantially be equal to $K_4 X_3$, and the recovering force of the adjustment unit 206a may substantially be equal to $K_4 X_4$. Since the elastic coefficient of the adjustment unit 204a is substantially the same as that of the adjustment unit 206a, the recovering force of the adjustment unit 204a and the adjustment unit 206a is dependent on their compressed length. As the thickness difference $X_4$ is greater than the thickness difference $X_3$, the fourth recovering force $F_4$ is greater than the third recovering force $F_3$.

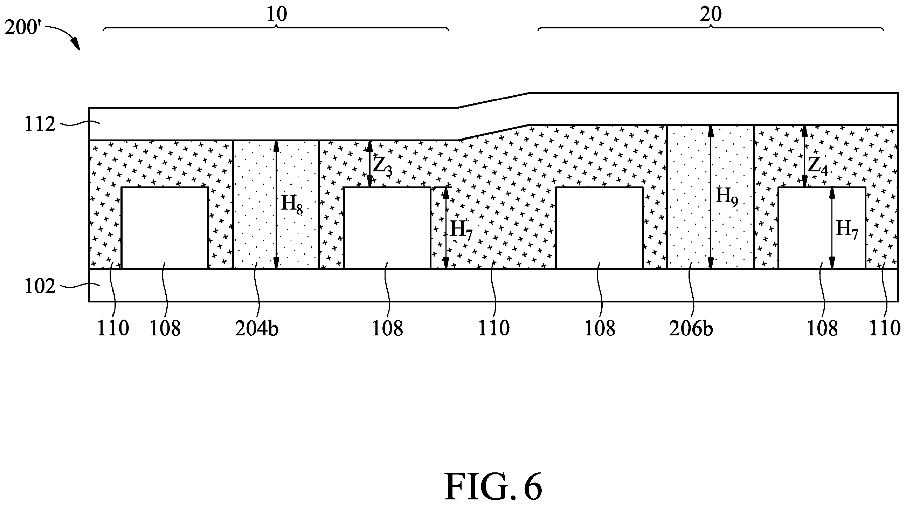

Refer to FIG. 6, which illustrates a cross-sectional view of the electronic modulating device 200' in accordance with some embodiments. The electronic modulating device 200 becomes the electronic modulating device 200' when its volume expands. As mentioned above, the fourth recovering force $F_4$ may be greater than the third recovering force $F_3$. Therefore, the recovering force pushing on the region of the second substrate 112 that corresponds to the second portion 20 is greater than that corresponds to the first portion 10. As a result, the distance between the first substrate 102 and the second substrate 112 that corresponds to the first portion 10 may be the distance $Z_3$ plus the thickness $H_7$, and the distance between the first substrate 102 and the second substrate 112 that corresponds to the second portion 20 may be the distance $Z_4$ plus the thickness $H_7$. The sum of the distance $Z_3$ and the thickness $H_7$ is less than that of the distance $Z_4$ and the thickness $H_7$. In other embodiments, the adjustment unit 204b may have the thickness $H_8$, and the adjustment unit 206b may have the thickness $H_9$. As shown in FIG. 6, the thickness $H_9$ may be greater than the thickness $H_8$. In this embodiment, the distance between the first substrate 102 and the second substrate 112 that corresponds to the first portion 10 is substantially equal to the thickness $H_8$, and the distance between the first substrate 102 and the second substrate 112 that corresponds to the second portion 20 is substantially equal to the thickness $H_9$, which is greater than the thickness $H_8$.

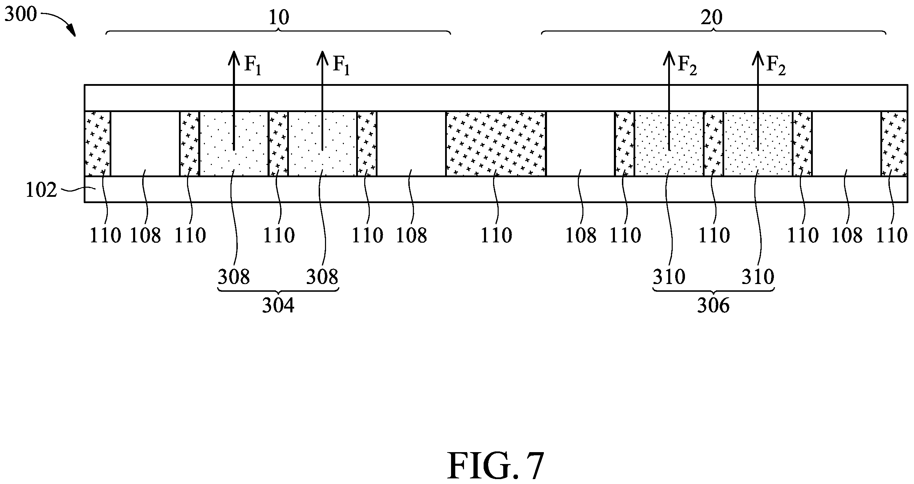

Many variations and/or modifications can be made to embodiments. Refer to FIG. 7, which illustrates a cross-sectional view of the electronic modulating device 300 in accordance with some embodiments. The electronic modulating device 300 may be the same as or similar to that of the electronic modulating device 100, and one of the differences is that the adjustment units 104 are replaced by adjustment units 304, and the adjustment units 106 are replaced by adjustment units 306. As shown in FIG. 7, the adjustment unit 304 includes a plurality of spacers 308, and the adjustment unit 306 includes a plurality of spacers 310. The material of the spacer 308 and the spacer 310 may be the same as or similar to that of the adjustment unit 104 and the adjustment unit 106, respectively, and is not repeated herein. In other embodiments, the material of the spacer 308 may be different from that of the spacer 310. FIG. 7 illustrates the adjustment unit 304 includes two spacers 308, and the adjustment unit 306 includes two spacers 310. In other embodiments, the adjustment unit 304 may include more than one spacer 308, and the adjustment unit 306 may include more than one spacers 310. The number of spacers 308 per unit area may be different from the number of spacers 310 per unit area. For example, the number of spacers 308 per unit area may be greater than or less than the number of spacers 310 per unit area. The unit area may be, but is not limited to, a rectangle region of 5cm X 5cm, 3cm X 3cm, 1cm X 1cm or another suitable region. In this embodiment, there are two recovering forces $F_1$ pushing on the second substrate 112 in the region that corresponds to the first portion 10, and there are two second recovering forces $F_2$ pushing on the second substrate 112 in the region that corresponds to the second portion 20. Since the second recovering force $F_2$ is greater than the first recovering force $F_1$, the distance difference between the first portion 10 of the first substrate 102 and the second substrate 112 is less than that between the second portion 20 of the first substrate 102 and the second substrate 112 when the electronic modulating device 300 is heated causing the volume changes.

In other embodiments, the adjustment unit 304 may include a plurality of spacers 308 whose elastic constant is respectively $K_{n1}$, $K_{n2}$, $K_{n3}$, and so on; compressed length is respectively $X_{n1}$, $X_{n2}$, $X_{n3}$, and so on. The adjustment unit 306 may include a plurality of spacers 310 whose elastic constant is respectively $K_{m1}$, $K_{m2}$, $K_{m3}$, and so on; compressed length is respectively $X_{m1}$, $X_{m2}$, $X_{m3}$, and so on. A portion of the compressed length and/or the elastic coefficient may be different. The number of spacers 308 may be different from the number of spacers 310. The recovering force of the adjustment unit 304 may be "$K_{n1}X_{n1} + K_{n2}X_{n2} + K_{n3}X_{n3} +.......$"; the recovering force of the adjustment unit 306 may be "$K_{m1}X_{m1} + K_{m2}X_{m2} + K_{m3}X_{m3} +........$" The recovering force of the adjustment unit 304 may less than the recovering force of the adjustment unit 306.

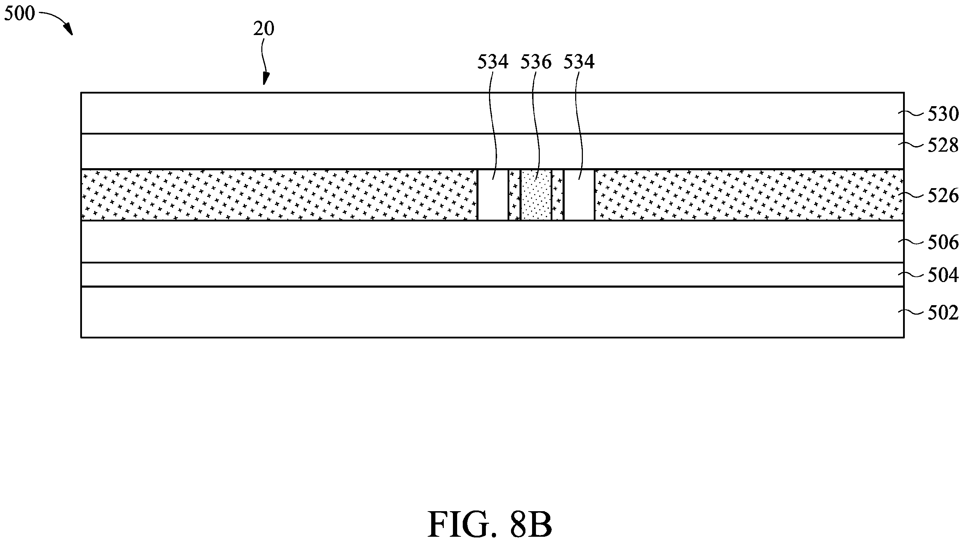

Refer to FIGs. 8A and 8B, FIG. 8A illustrates a cross-sectional view of the first portion 10 of an electronic modulating device 500, and FIG. 8B illustrates a cross-sectional view of the second portion 20 of the electronic modulating device 500 in accordance with some embodiments. For brevity, some elements are omitted in FIGs. 8A and 8B. The first portion 10 of the electronic modulating device 500 corresponds to the first portion 10 of the electronic modulating device 100, 200 or 300. The second portion 20 of the electronic modulating device 500 corresponds to the second portion 20 of the electronic modulating device 100, 200 or 300.

As shown in FIGs. 8A and 8B, the electronic modulating device 500 includes a substrate 502. The substrate 502 is used to let the working device or other elements dispose thereon. The substrate 502 may include, but is not limited to, glass substrate, ceramic substrate, polymer substrate or another suitable substrate. The electronic modulating device 500 may include an insulating layer 504 and a protective layer 506. The insulating layer 504 may be disposed on the substrate 502, and the protective layer 506 may be disposed on the insulating layer 504. The material of the insulating layer 504 may include, but is not limited to, silicon oxide, silicon nitride or another suitable dielectric material. The material of the protective layer 506 may include, but is not limited to, phosphosilicate glass (PSG), borophosphosilicate glass (BPSG), low dielectric constant (low-k) material, or another suitable material. The low dielectric constant dielectric materials may include, but are not limited to, fluorinated silica glass (FSG), carbon doped silicon oxide, amorphous fluorinated carbon, parylene, bis-benzocyclobutenes (BCB), polyimides, or another suitable material.

As shown in FIG. 8A, there is at least one working device 540 that is formed on the first portion 10 of the substrate 502. The working device 540 includes a driving element 508, a first electrode 522, a second electrode 524 and a modulating material layer 526. In some embodiments, the driving element 508 may include a thin film transistor (TFT). In some embodiments, the driving element 508 may include a source electrode 510, a drain electrode 512, a gate electrode 514 and an active layer 516. The gate electrode 514 may include, but is not limited to, polysilicon, metal or another conductive material. The metal may include, but is not limited to, copper (Cu), aluminum (Al), molybdenum (Mo), tungsten (W), gold (Au), chromium (Cr), nickel (Ni), platinum (Pt), titanium (Ti). The material of the active layer 516 may include amorphous semiconductor, poly-semiconductor and/or metal oxide. The semiconductor may include, but is not limited to, germanium (Ge), silicon (Si), tin (Sn), antimony (Sb), selenium (Se) or tellurium (Te). The metal oxide may include, but is not limited to, indium gallium zinc oxide (IGZO), indium zinc oxide (IZO), indium gallium zinc oxide (IGZTO). The source electrode 510 and the drain electrode 512 are disposed on the insulating layer 504 and on two sides of the gate electrode 514. In addition, the material of the drain electrode 512 and the source electrode 510 may include metal, such as copper (Cu), aluminum (Al), molybdenum (Mo), tungsten (W), gold (Au), chromium (Cr), nickel (Ni), platinum (Pt), titanium (Ti). The active layer 516 may include a channel region 518 that is disposed between the source electrode 510 and the drain electrode 512. As shown in FIG. 8B, the working device 540 does not be disposed in the second portion 20.

FIG. 8A illustrates that the gate electrode 514 is disposed under the insulating layer 504. Many variations and/or modifications can be made to embodiments of the disclosure. In some embodiments, the gate electrode 514 may be disposed above the active layer 516; the gate electrode 514 may have two portions, the first portion is disposed on the substrate 502, and the second portion is disposed on the protective layer 506. However, the scope of the disclosure is not intended to be limited.

As shown in FIG. 8A, in the first portion 10, the electronic modulating device 500 may include a conductive wire 520, the first electrode 522, the second electrode 524 and the modulating material layer 526. The material of the conductive wire 520, the first electrode 522 and the second electrode 524 may include metal, metal oxide and another suitable conductive material.

As shown in FIG. 8A, the modulating material layer 526 is disposed between the first electrode 522 and the second electrode 524. In some embodiments, the first electrode 522 and/or the second electrode 524 may be patterned and have multiple openings. The electronic field, between the first electrode 522 and the second electrode 524, may affect the status of the modulating material layer 526. In some embodiments, the first electrode 522 and/or the second electrode 524 may not extend to the second portion 20. In some embodiments, the first electrode 522 and/or the second electrode 524 may extend to the second portion 20.

In addition, the electronic modulating device 500 may include a display element layer 528 and/or a substrate 530. The display element layer 528 may be disposed on the second electrode 524. The display element layer 528 may include, but is not limited to, a light filter layer, a light shielding layer, a protective layer and/or other elements. The substrate 530 may include, but is not limited to, glass substrate, ceramic substrate, polymer substrate or another suitable substrate. In some embodiments, the electronic modulating device 500 may include an electromagnetic element (not shown), which is used to emit and/or receive electromagnetic signal.

According to the claimed invention, the electronic modulating device 500 includes an adjustment unit 532 and an adjustment unit 534 in the first portion 10. As shown in FIG. 8A, the adjustment unit 532 and the adjustment unit 534 are disposed between the substrate 502 and the substrate 530. According to the claimed invention, the electronic modulating device 500 includes the adjustment unit 534 and an adjustment unit 536 in the second portion 20. As shown in FIG. 8B, the adjustment unit 534 and the adjustment unit 536 are disposed between the substrate 502 and the substrate 530. In some embodiments, the adjustment unit 532, the adjustment unit 534 and the adjustment unit 536 may correspond to the adjustment unit 104a, the adjustment unit 108 and the adjustment unit 106a, respectively.

According to the claimed invention, the electronic modulating device includes the first adjustment unit that has the first recovering force per unit area and the second adjustment unit that has the second recovering force per unit area. The second recovering force is greater than the first recovering force. The unit area may be, but is not limited to, a rectangle region of 5cm X 5cm, 3cm X 3cm, 1cm X 1cm or another suitable region. The first adjustment unit is disposed on the region on which the working devices are disposed. The second adjustment unit is disposed on the region on which the working device is not disposed. When the volume of the electronic modulating device changes, the distance between two substrates in the region that has greater recovering force may change more quickly or greatly. In the present disclosure, the distance between two substrates in the region that has the working devices may change more slowly or slightly. Therefore, the stability of the electronic modulating device may be improved. In some embodiments, the recovering force of the adjustment unit may be controlled by changing its elastic coefficient, material, the number of spacers, compressed length or thickness, density, another suitable parameter, or a combination thereof. In addition, the elastic coefficient may indicate spring constant or Young's modulus. In the present disclosure, the parameters mentioned above may be measured before assembly or after the electronic modulating device has been detached. The electronic modulating device of the present disclosure may be used in a display device, an antenna device, an automotive device, a touch device, a sensor device, another device, or a combination thereof.

## Claims

1. An electronic modulating device (100) for modulating electromagnetic waves, comprising:

   a first substrate (102) comprising a first portion (10) and a second portion (20);
   a second substrate (112) disposed opposite to the first substrate;
   at least one working device disposed between the first substrate (102) and the second substrate (112), and the working device comprising a driving element (508), a first electrode (522) and a second electrode (524), wherein the at least one working device overlaps the first portion (10) and does not overlap the second portion (10), and there is no working device on a region of the first substrate corresponding to the second portion;
   a first adjustment unit (104) disposed between the first portion (10) of the first substrate (102) and the second substrate (112), wherein the first adjustment unit comprises a first spacer which has a first elastic coefficient (K1);
   a second adjustment unit (106) disposed between the second portion (20) of the first substrate (102) and the second substrate (112) wherein the second adjustment unit comprises a second spacer which has a second elastic coefficient (K2); and
   a modulating material layer (110, 526) disposed between the first substrate (102) and the second substrate (112), and between the first electrode and the second electrode, wherein the modulating material layer is a liquid crystal layer;
   wherein the electronic modulating device (100) further comprises:

      a plurality of third adjustment units (108) disposed between the first substrate (102) and the second substrate (112), and each of the plurality of third adjustment units consist of a spacer and has a third elastic coefficient (K3), wherein the first adjustment unit is disposed between two of the plurality of third adjustment units, and the second adjustment unit is disposed between another two of the plurality of third adjustment units;
      wherein the unit of the first elastic coefficient (K1), the second elastic coefficient (K2) and the third elastic coefficient (K3) is N/m$^2$, the first elastic coefficient (K1), the second elastic coefficient (K2) and the third elastic coefficient (K3) respectively correspond to Young's modulus of the material forming the spacers of the first adjustment unit, the second adjustment unit and the third adjustment unit, and the first elastic coefficient (K1) is less than the second elastic coefficient (K2), and the third elastic coefficient (K3) is greater than the second elastic coefficient (K2) and wherein the first spacer and the second spacer have the same height before their compression between the first substrate and the second substrate.

2. The electronic modulating device according to claim 1, **characterized in that** a distance in the second portion (20) between the first substrate and the second substrate (112) is greater than a distance in the first portion (10) between the first substrate and the second substrate (112).

3. The electronic modulating device according to claim 1 or 2, **characterized in that** a material of the first spacer is different from a material of the second spacer.

4. The electronic modulating device according to one of the claims 1-3, **characterized in that** the first adjustment unit comprises a plurality of first spacers, the second adjustment unit comprises a plurality of second spacers and a number of the plurality of first spacers (308) per unit area is less than a number of the plurality of second spacers (310) per unit area.

5. The electronic modulating device according to one of the claims 1-4, **characterized in that** the modulating material layer fills a gap between the first adjustment unit (104) and the second adjustment unit (106).

6. The electronic modulating device according to one of the claims 1-5, **characterized in that** a material of the first spacer and the second spacer comprises photoresist.

7. An electronic modulating device (200) for modulating electromagnetic waves, comprising:

   a first substrate (102) comprising a first portion (10) and a second portion (20);
   a second substrate (112) disposed opposite to the first substrate;
   at least one working device disposed between the first substrate (102) and the second substrate (112), and the working device comprising a driving element (508), a first electrode (522) and a second electrode (524), wherein the at least one working device overlaps the first portion (10) and does not overlap the second portion (20), and there is no working device on a region of the first substrate corresponding to the second portion;
a first adjustment unit (204, 304) disposed between the first portion (10) of the first substrate (102) and the second substrate (112), wherein the first adjustment unit (204) comprises a first spacer which has a first thickness (H$_5$) along a normal direction of the first substrate (102) before compression between the substrates;
a second adjustment unit (206, 306) disposed between the second portion (20) of the first substrate (102) and the second substrate (112), wherein the second adjustment unit (206) comprises a second spacer which has a second thickness (H$_6$) along the normal direction of the first substrate (102) before compression between the substrates; and
a modulating material layer (110) disposed between the first substrate (102) and the second substrate (112), and between the first electrode and the second electrode, wherein the modulating material layer is a liquid crystal layer; wherein the first spacer and the second spacer have the same elastic coefficient;
wherein the electronic modulating device (200) further comprises:

   a plurality of third adjustment units (108) disposed between the first substrate (102) and the second substrate (122), each of the plurality of third adjustment units consists of a spacer and each of the plurality of third adjustment units (108) has a third thickness (H$_7$) along the normal direction of the first substrate (102) before compression between the substrates,
   wherein the first adjustment unit is disposed between two of the plurality of third adjustment units, and the second adjustment unit is disposed between another two of the plurality of third adjustment units; wherein the first thickness (H$_5$) is less than the second thickness (H$_6$) and the third thickness (H$_7$) is less than the first thickness (H$_5$).

8. The electronic modulating device according to claim 7, **characterized in that** the plurality of third adjustment unit (108) overlaps the first portion (10) and the second portion (20).

9. The electronic modulating device according to claim 7 or 8, **characterized in that** a distance in the second portion (20) between the first substrate and the second substrate (112) is greater than a distance in the first portion (10) between the first substrate and the second substrate (112).

10. The electronic modulating device according to one of the claims 7-9, **characterized in that** the modulating material layer (526) fills a gap between the first adjustment unit (104) and the second adjustment unit (106).

11. The electronic modulating device according to one of the claims 7-10, **characterized in that** a material of the first spacer and the second spacer comprises photoresist.

12. The electronic modulating device according to one of the claims 7-11, **characterized in that** the working device includes a thin film transistor, TFT.

**Patentansprüche**

1. Elektronische Modulationsvorrichtung (100) zur Modulation elektromagnetischer Wellen, die Folgendes umfassend:

ein erstes Substrat (102) mit einem ersten Abschnitt (10) und einem zweiten Abschnitt (20); ein zweites Substrat (112), das gegenüber dem ersten Substrat angeordnet ist; mindestens eine Arbeitsvorrichtung, die zwischen dem ersten Substrat (102) und dem zweiten Substrat (112) angeordnet ist, und wobei die Arbeitsvorrichtung ein Antriebselement (508), eine erste Elektrode (522) und eine zweite Elektrode (524) umfasst, wobei die mindestens eine Arbeitsvorrichtung den ersten Abschnitt (10) überlappt und den zweiten Abschnitt (10) nicht überlappt, und es keine Arbeitsvorrichtung auf einem Bereich des ersten Substrats gibt, der dem zweiten Abschnitt entspricht; eine erste Anpassungseinheit (104), die zwischen dem ersten Abschnitt (10) des ersten Substrats (102) und dem zweiten Substrat (112) angeordnet ist, wobei die erste Anpassungseinheit einen ersten Abstandshalter umfasst, der einen ersten Elastizitätskoeffizienten (K1) aufweist; eine zweite Anpassungseinheit (106), die zwischen dem zweiten Abschnitt (20) des ersten Substrats (102) und dem zweiten Substrat (112) angeordnet ist, wobei die zweite Anpassungseinheit einen zweiten Abstandshalter umfasst, der einen zweiten Elastizitätskoeffizienten (K2) aufweist; und eine Modulationsmaterialschicht (110, 526), die zwischen dem ersten Substrat (102) und dem zweiten Substrat (112) und zwischen der ersten Elektrode und der zweiten Elektrode angeordnet ist, wobei die Modulationsmaterialschicht eine Flüssigkristallschicht ist; wobei die elektronische Modulationsvorrichtung (100) ferner umfasst:

eine Vielzahl von dritten Anpassungseinheiten (108), die zwischen dem ersten Substrat (102) und dem zweiten Substrat (112) angeordnet sind, und wobei jede der Vielzahl von dritten Anpassungseinheiten aus einem Abstandshalter besteht und einen dritten Elastizitätskoeffizienten (K3) aufweist, wobei die erste Anpassungseinheit zwischen zwei der Vielzahl von dritten Anpassungseinheiten angeordnet ist, und die zweite Anpassungseinheit zwischen zwei weiteren der Vielzahl von dritten Anpassungseinheiten angeordnet ist; wobei die Einheit des ersten Elastizitätskoeffizienten (K1), des zweiten Elastizitätskoeffizienten (K2) und des dritten Elastizitätskoeffizienten (K3) $N/m^2$ ist, wobei der erste Elastizitätskoeffizient (K1), der zweite Elastizitätskoeffizient (K2) und der dritte Elastizitätskoeffizient (K3) jeweils dem Elastizitätsmodul bzw. dem Youngschen Modulus des Materials entsprechen, das die Abstandshalter der ersten Anpassungseinheit, der zweiten Anpassungseinheit und der dritten Anpassungseinheit ausbildet, und wobei der erste Elastizitätskoeffizient (K1) kleiner als der zweite Elastizitätskoeffizient (K2) ist, und der dritte Elastizitätskoeffizient (K3) größer als der zweite Elastizitätskoeffizient (K2) ist, und wobei der erste Abstandshalter und der zweite Abstandshalter vor ihrer Kompression zwischen dem ersten Substrat und dem zweiten Substrat die gleiche Höhe aufweisen.

2. Elektronische Modulationsvorrichtung nach Anspruch 1, **dadurch gekennzeichnet, dass** ein Abstand in dem zweiten Abschnitt (20) zwischen dem ersten Substrat und dem zweiten Substrat (112) größer ist als ein Abstand in dem ersten Abschnitt (10) zwischen dem ersten Substrat und dem zweiten Substrat (112).

3. Elektronische Modulationsvorrichtung nach Anspruch 1 oder 2, **dadurch gekennzeichnet, dass** ein Material des ersten Abstandshalters von einem Material des zweiten Abstandshalters verschieden ist.

4. Elektronische Modulationsvorrichtung nach einem der Ansprüche 1 bis 3, **dadurch gekennzeichnet, dass** die erste Anpassungseinheit eine Vielzahl von ersten Abstandshaltern umfasst, die zweite Anpassungseinheit eine Vielzahl von zweiten Abstandshaltern umfasst und eine Anzahl der Vielzahl von ersten Abstandshaltern (308) pro Flächeneinheit geringer ist als eine Anzahl der Vielzahl von zweiten Abstandshaltern (310) pro Flächeneinheit.

5. Elektronische Modulationsvorrichtung nach einem der Ansprüche 1 bis 4, **dadurch gekennzeichnet, dass** die Modulationsmaterialschicht einen Spalt zwischen der ersten Anpassungseinheit (104) und der zweiten Anpassungseinheit (106) füllt.

6. Elektronische Modulationsvorrichtung nach einem der Ansprüche 1-5, **dadurch gekennzeichnet, dass** ein Material des ersten Abstandshalters und des zweiten Anpassungsabstandshalters Fotolack umfasst.

7. Elektronische Modulationsvorrichtung (200) zur Modulation elektromagnetischer Wellen, umfassend:

ein erstes Substrat (102) mit einem ersten Abschnitt (10) und einem zweiten Abschnitt (20); ein zweites Substrat (112), das gegenüber dem ersten Substrat angeordnet ist; mindestens eine Arbeitsvorrichtung, die zwischen dem ersten Substrat (102) und dem zweiten Substrat (112) angeordnet ist, und wobei die Arbeitsvorrichtung ein Antriebselement (508), eine erste Elektrode (522) und eine zweite Elektrode (524) umfasst, wobei die mindestens eine Arbeitsvorrichtung den ersten Abschnitt (10) überlappt und den zweiten Abschnitt (20) nicht überlappt, und es keine Arbeitsvorrichtung in einem Bereich des ersten Substrats gibt, der dem zweiten Abschnitt entspricht; eine erste Anpassungseinheit (204, 304), die zwischen dem ersten Abschnitt (10) des ersten Substrats (102) und dem zweiten Substrat (112) angeordnet ist, wobei die erste Anpassungseinheit (204) einen ersten Abstandshalter umfasst, der eine erste Höhe (H5) entlang einer normalen Richtung des ersten Substrats (102) vor der Kompression zwischen den Substraten aufweist; eine zweite Anpassungseinheit (206, 306), die zwischen dem zweiten Abschnitt (20) des ersten Substrats (102) und dem zweiten Substrat (112) angeordnet ist, wobei die zweite Anpassungseinheit (206) einen zweiten Abstandshalter umfasst, der eine zweite Höhe (H6) entlang der normalen Richtung des ersten Substrats (102) vor der Kompression zwischen den Substraten aufweist; und eine Modulationsmaterialschicht (110), die zwischen dem ersten Substrat (102) und dem zweiten Substrat (112) und zwischen der ersten Elektrode und der zweiten Elektrode angeordnet ist, wobei die modulierende Materialschicht eine Flüssigkristallschicht ist; wobei der erste Abstandshalter und der zweite Abstandshalter denselben Elastizitätskoeffizienten aufweisen; wobei die elektronische Modulationsvorrichtung (200) ferner umfasst:

eine Vielzahl von dritten Anpassungseinheiten (108), die zwischen dem ersten Substrat (102) und dem zweiten Substrat (122) angeordnet sind, wobei jede der Vielzahl von dritten Anpassungseinheiten aus einem Abstandshalter besteht und jede der Vielzahl von dritten Anpassungseinheiten (108) eine dritte Höhe (H7) entlang der normalen Richtung des ersten Substrats (102) vor der Kompression zwischen den Substraten aufweist, wobei die erste Anpassungseinheit zwischen zwei der Vielzahl von dritten Anpassungseinheiten angeordnet ist und die zweite Anpassungseinheit zwischen weiteren zwei der Vielzahl von dritten Anpassungseinheiten angeordnet ist; wobei die erste Höhe (H5) geringer ist als die zweite Höhe (H6) und die dritte Höhe (H7) geringer ist als die erste Höhe (H5).

8. Elektronische Modulationsvorrichtung nach Anspruch 7, **dadurch gekennzeichnet, dass** die Vielzahl der dritten Anpassungseinheiten (108) den ersten Abschnitt (10) und den zweiten Abschnitt (20) überlappt.

9. Elektronische Modulationsvorrichtung nach Anspruch 7 oder 8, **dadurch gekennzeichnet, dass** ein Abstand in dem zweiten Abschnitt (20) zwischen dem ersten Substrat und dem zweiten Substrat (112) größer ist als ein Abstand in dem ersten Abschnitt (10) zwischen dem ersten Substrat und dem zweiten Substrat (112).

10. Elektronische Modulationsvorrichtung nach einem der Ansprüche 7 bis 9, **dadurch gekennzeichnet, dass** die modulierende Materialschicht (526) einen Spalt zwischen der ersten Anpassungseinheit (104) und der zweiten Anpassungseinheit (106) ausfüllt.

11. Elektronische Modulationsvorrichtung nach einem der Ansprüche 7-10, **dadurch gekennzeichnet, dass** ein Material des ersten Abstandshalters und des zweiten Abstandshalters Fotolack umfasst.

12. Elektronische Modulationsvorrichtung nach einem der Ansprüche 7-11, **dadurch gekennzeichnet, dass** die Arbeitsvorrichtung einen Dünnschichttransistor (TFT) umfasst.

**Revendications**

1. Dispositif de modulation électronique (100) pour moduler des ondes électromagnétiques, comprenant:

   un premier substrat (102) ayant une première partie (10) et une deuxième partie (20);
   un deuxième substrat (112) disposé à l'opposé du premier substrat;
   au moins un dispositif de travail disposé entre le premier substrat (102) et le deuxième substrat (112), et dans lequel le dispositif de travail comprend un élément d'entraînement (508), une première électrode (522) et une deuxième électrode (524), dans lequel le au moins un dispositif de travail chevauche la première partie (10) et ne chevauche pas la deuxième partie (10), et il n'y a pas de dispositif de travail sur une zone du premier substrat qui correspond à la deuxième partie;
   une première unité d'adaptation (104) disposée entre la première partie (10) du premier substrat (102) et le deuxième substrat (112), la première unité d'adaptation comprenant une première entretoise ayant un premier coefficient d'élasticité (K1);
   une seconde unité d'adaptation (106) disposée entre la seconde partie (20) du premier substrat (102) et le second substrat (112), la seconde unité d'adaptation comprenant une seconde entretoise ayant un second coefficient d'élasticité (K2); et
   une couche de matériau de modulation (110, 526) disposée entre le premier substrat (102) et le second substrat (112) et entre la première électrode et la seconde électrode, la couche de matériau de modulation étant une couche de cristaux liquides;
   dans lequel le dispositif de modulation électronique (100) comprend en outre:

   une pluralité de troisièmes unités d'adaptation (108) disposées entre le premier substrat (102) et le deuxième substrat (112), et dans lequel chacune de la pluralité de troisièmes unités d'adaptation est constituée d'une entretoise et a un troisième coefficient d'élasticité (K3), la première unité d'adaptation étant disposée entre deux de la pluralité de troisièmes unités d'adaptation, et la deuxième unité d'adaptation étant disposée entre deux autres de la pluralité de troisièmes unités d'adaptation;
   dans lequel l'unité du premier coefficient d'élasticité (K1), du deuxième coefficient d'élasticité (K2) et du troisième coefficient d'élasticité (K3) est N/m$^2$, le premier coefficient d'élasticité (K1), le deuxième coefficient d'élasticité (K2) et le troisième coefficient d'élasticité (K3) correspondant respectivement au module d'élasticité, également appelé Young's modulus, formant les entretoises de la première unité d'adaptation, de la deuxième unité d'adaptation et de la troisième unité d'adaptation, et dans lequel le premier coefficient d'élasticité (K1) est inférieur au deuxième coefficient d'élasticité (K2) et le troisième coefficient d'élasticité (K3) est supérieur au deuxième coefficient d'élasticité (K2), et dans lequel la première entretoise et la deuxième entretoise ont la même hauteur avant leur compression entre le premier substrat et le deuxième substrat.

2. Dispositif de modulation électronique selon la revendication 1, **caractérisé en ce qu'**une distance dans la deuxième partie (20) entre le premier substrat et le deuxième substrat (112) est supérieure à une distance dans la première partie (10) entre le premier substrat et le deuxième substrat (112).

3. Dispositif de modulation électronique selon la revendication 1 ou 2, **caractérisé en ce qu'**un matériau de la première entretoise est différent d'un matériau de la deuxième entretoise.

4. Dispositif de modulation électronique selon l'une des revendications 1 à 3, **caractérisé en ce que** la première unité d'adaptation comprend une pluralité de premières entretoises, la deuxième unité d'adaptation comprend une pluralité de deuxièmes entretoises, et un nombre de la pluralité de premières entretoises (308) par unité de surface est inférieur à un nombre de la pluralité de deuxièmes entretoises (310) par unité de surface.

5. Dispositif de modulation électronique selon l'une quelconque des revendications 1 à 4, **caractérisé en ce que** la couche de matériau de modulation remplit un espace entre la première unité d'adaptation (104) et la deuxième unité d'adaptation (106).

6. Dispositif électronique de modulation selon l'une quelconque des revendications 1 à 5, **caractérisé en ce qu'**un matériau de la première entretoise et de la deuxième entretoise d'adaptation comprend de la résine photosensible.

7. Dispositif de modulation électronique (200) pour moduler des ondes électromagnétiques, comprenant :

   un premier substrat (102) ayant une première partie (10) et une deuxième partie (20) ;
   un deuxième substrat (112) disposé en face du premier substrat ;

au moins un dispositif de travail disposé entre le premier substrat (102) et le deuxième substrat (112), et dans lequel le dispositif de travail comprend un élément d'entraînement (508), une première électrode (522) et une deuxième électrode (524), dans lequel le au moins un dispositif de travail chevauche la première partie (10) et ne chevauche pas la deuxième partie (20), et il n'y a pas de dispositif de travail dans une zone du premier substrat qui correspond à la deuxième partie;

une première unité d'adaptation (204, 304) disposée entre la première partie (10) du premier substrat (102) et le deuxième substrat (112), la première unité d'adaptation (204) comprenant une première entretoise ayant une première hauteur (H5) le long d'une direction normale du premier substrat (102) avant la compression entre les substrats;

une seconde unité d'adaptation (206, 306) disposée entre la seconde partie (20) du premier substrat (102) et le second substrat (112), la seconde unité d'adaptation (206) comprenant une seconde entretoise ayant une seconde hauteur (H6) le long de la direction normale du premier substrat (102) avant la compression entre les substrats; et

une couche de matériau de modulation (110) disposée entre le premier substrat (102) et le second substrat (112) et entre la première électrode et la seconde électrode, la couche de matériau de modulation étant une couche de cristaux liquides ; dans lequel la première entretoise et la seconde entretoise ont le même coefficient d'élasticité;

dans lequel le dispositif de modulation électronique (200) comprend en outre:

une pluralité de troisièmes unités d'adaptation (108) disposées entre le premier substrat (102) et le deuxième substrat (122), chacune de la pluralité de troisièmes unités d'adaptation étant constituée d'une entretoise et chacune de la pluralité de troisièmes unités d'adaptation (108) ayant une troisième hauteur (H7) le long de la direction normale du premier substrat (102) avant la compression entre les substrats, la première unité d'adaptation étant disposée entre deux de la pluralité de troisièmes unités d'adaptation et la deuxième unité d'adaptation étant disposée entre deux autres de la pluralité de troisièmes unités d'adaptation; dans lequel la première hauteur (H5) est inférieure à la deuxième hauteur (H6) et la troisième hauteur (H7) est inférieure à la première hauteur (H5).

8. Dispositif de modulation électronique selon la revendication 7, **caractérisé en ce que** la pluralité de troisièmes unités d'adaptation (108) chevauchent la première section (10) et la deuxième section (20).

9. Dispositif de modulation électronique selon la revendication 7 ou 8, **caractérisé en ce qu'**une distance dans la deuxième section (20) entre le premier substrat et le deuxième substrat (112) est supérieure à une distance dans la première section (10) entre le premier substrat et le deuxième substrat (112).

10. Dispositif de modulation électronique selon l'une quelconque des revendications 7 à 9, **caractérisé en ce que** la couche de matériau de modulation (526) remplit un espace entre la première unité d'adaptation (104) et la deuxième unité d'adaptation (106).

11. Dispositif électronique de modulation selon l'une quelconque des revendications 7 à 10, **caractérisé en ce qu'**un matériau de la première entretoise et de la deuxième entretoise comprend de la résine photosensible.

12. Dispositif de modulation électronique selon l'une quelconque des revendications 7 à 11, **caractérisé en ce que** le dispositif de travail comprend un transistor à couche mince (TFT).

FIG. 1

FIG. 2

EP 3 588 180 B1

EP 3 588 180 B1

10

20

$X_1$

$H_1$

$H_2$

102

108     104     108        108     106     108

# FIG. 3A

10

20

100

$D_1$

$F_1$

$F_2$

$D_1$

112

$H_2'$

$H_2'$

$H_2'$

$H_2'$

102

110   108   110   104a   110   108     110     108   110   106a   110   108   110

# FIG. 3B

FIG.4

EP 3 588 180 B1

FIG. 5A

FIG. 5B

FIG.6

EP 3 588 180 B1

FIG.7

FIG. 8A

FIG. 8B

EP 3 588 180 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811465528
- US 62688457
- US 2002005929 A1
- US 2007097312 A1
- JP 2003121857 A